Europäisches Patentamt

(19) European Patent Office

Office européen des brevets

(11) Numéro de publication : **0 069 627**
**B1**

(12) **FASCICULE DE BREVET EUROPÉEN**

(45) Date de publication du fascicule du brevet :
20.08.86

(51) Int. Cl.⁴ : **G 02 F   1/35, H 01 S   3/10**

(21) Numéro de dépôt : 82401148.0

(22) Date de dépôt : 22.06.82

(54) **Dispositif d'éclairage évolutif d'un objet.**

(30) Priorité : 30.06.81 FR 8112833

(43) Date de publication de la demande :
12.01.83 Bulletin 83/02

(45) Mention de la délivrance du brevet :
20.08.86 Bulletin 86/34

(84) Etats contractants désignés :
DE GB NL SE

(56) Documents cités :
US-A- 4 220 928
APPLIED PHYSICS LETTERS, vol.31, no.9, 1er novembre 1977, American Institute of Physics, New York
(US), D.M. BLOOM et al.: "Conjugate wave-front
generation and image reconstruction by four-wave
mixing", pages 592-594
IBM TECHNICAL DISCLOSURE BULLETIN, vol.22,
no.9, février 1980, New York (US), G.T. SINCERBOX:
"Regenerative information storage and display using
phase conjugation", pages 4173-4174
JOURNAL OF THE OPTICAL SOCIETY OF AMERICA,
vol.68, no.11, novembre 1978, New York (US), J.
FELDMAN et al.: "2% Efficient phase-conjugate
reflection in germanium at 10.6 um", pages 1628-1629
JOURNAL OF THE OPTICAL SOCIETY OF AMERICA,
vol.70, no.6, juin 1980, réf.no. E.3, New York (US), J.
FEINBERG et al.: "Four-wave mixing in photorefractive materials", page 599
JOURNAL OF THE OPTICAL SOCIETY OF AMERICA,
vol.70, no.6, juin 1980, réf.no. E.4, New York (US), R.K.
JAIN et al.: "Degenerate four-wave mixing near the
band gap of semiconductors", pages 599-600
OPTICS COMMUNICATIONS, vol.32, no.3, mars 1980,
Amsterdam (NL), D.A.B. MILLER et al.: "Degenerate
four wave mixing in InSb at 5K" pages 478-480

(73) Titulaire : **THOMSON-CSF**
**173, Boulevard Haussmann**
**F-75379 Paris Cedex 08 (FR)**

(72) Inventeur : **Huignard, Jean-Pierre**
**THOMSON-CSF SCPI 173, bld Haussmann**
**F-75379 Paris Cedex 08 (FR)**

(74) Mandataire : **Thrierr, Françoise et al**
**THOMSON-CSF SCPI 19, avenue de Messine**
**F-75008 Paris (FR)**

## Description

L'invention se rapporte aux dispositifs d'éclairage d'objets, notamment aux dispositifs qui permettent d'éclairer efficacement un objet éloigné pendant un temps prolongé en dépit des inhomogénéités d'indice séparant le dispositif d'éclairage de l'objet.

Pour éclairer un objet éloigné, il est avantageux d'utiliser un rayonnement optique cohérent, émis par un laser par exemple. Mais la propagation d'un faisceau laser dans l'atmosphère est généralement accompagnée de perturbations importantes de la phase de l'onde optique. Ces distorsions sont créées par la présence, dans l'atmosphère de gradients d'indice aléatoires ou par traversée de composants optiques présentant une répartition inhomogène de l'indice de réfraction. Dans ces conditions, la présence de perturbations empêche qu'un maximum d'énergie rayonnée atteigne l'objet à éclairer.

Pour pallier ces inconvénients, le dispositif d'éclairage selon l'invention met en oeuvre des moyens permettant d'assurer une bonne concentration d'énergie rayonnée sur un objet à éclairer pendans un laps de temps prolongé, à partir d'un éclairement transitoire initial, quelles que soient les turbulences et perturbations de l'atmosphère traversée.

Ce résultat est obtenu en utilisant, pour réaliser le dispositif d'éclairage, les techniques dites de mélange à quatre ondes. Selon ces techniques, en faisant interférer dans un milieu optique photoexcitable à variation d'indice, une onde incidente de front d'onde quelconque avec une onde de pompe, on génère, en temps réel, une onde conjuguée de l'onde incidente, c'est-à-dire une onde qui suit exactement le même trajet, en sens inverse, que l'onde incidente et subit donc les mêmes déformations en sens inverse.

Un dispositif d'éclairage utilisant les techniques susmentionnées pour produire la fusion d'une cible et présentant les caractéristiques spécifiées dans le préambule de la revendication 1 est décrit dans le document US-A-4 220 928.

Suivant l'invention, on dispose un tel milieu d'interaction à l'intérieur d'une cavité laser fermée par deux miroirs à réflexion totale. On le dispose sur le trajet du rayonnement intra-cavité qui joue le rôle d'onde de pompe. Si l'objet émet vers le dispositif une onde signal transitoire, par exemple s'il est éclairé par une impulsion lumineuse, cette onde signal interfère, dans le volume du milieu photoexcitable avec l'onde de pompe, c'est-à-dire le rayonnement intra-cavité du laser, ce qui a pour effet de générer une onde conjuguée de l'onde signal reçue par le milieu.

Cette onde conjuguée retourne vers l'objet en suivant le même parcours, et en subissant les mêmes déformations. Elle peut alors se réfléchir sur l'objet et retourner vers le dispositif d'éclairage constituant ainsi une nouvelle onde signal, qui tient compte du nouvel état de l'atmosphère traversée. Elle génère à nouveau une onde conjuguée, et ainsi de suite.

A partir d'une onde signal transitoire émanant de l'objet, ce dispositif assure ainsi un éclairage évolutif de cet objet, quelles que soient les perturbations de l'atmosphère et même si l'objet et le dispositif sont en déplacement relatif.

L'invention se rapporte précisément à un dispositif d'éclairage d'un objet par le rayonnement issu d'un laser dont la cavité est fermée par deux miroirs, ledit rayonnement étant perturbé par un milieu de transmission situé entre ledit laser et ledit objet, ledit rayonnement étant émis vers ledit objet par un milieu d'interaction photoexcitable à variation d'indice, disposé à l'intérieur de la cavité dudit laser sur le trajet du rayonnement intra-cavité, ce rayonnement intra-cavité interférant au sein de ce milieu avec une onde signal provenant dudit objet pour générer une onde complexe conjuguée de l'onde signal, cette onde conjuguée retournant vers l'objet, caractérisé en ce que ledit milieu de transmission est un milieu fluctuant, en ce que l'onde signal qui traverse ce milieu de transmission évolue lentement dans le temps par rapport au temps d'inscription du milieu d'interaction, sous l'effet des fluctuations temporelles de phase résultant dudit milieu fluctuant, de sorde que l'onde conjuguée réfléchie par l'objet, après de multiples aller-retours entre l'objet et le milieu d'interaction, maintienne l'existence du réseau dans le milieu d'interaction en modifiant, en permanence en fonction des perturbations du milieu fluctuant, la forme des strates de ce réseau, et en ce que les deux miroirs de la cavité laser sont des miroirs à réflexion totale, l'éclairage évolutif prolongé de l'objet étant initié par un moyen de prélèvement intracavité dirigeant vers ledit objet un prééclairement de courte durée par rapport au temps d'éclairage de l'objet par l'onde conjuguée traversant ledit milieu de transmission.

L'invention sera mieux comprise à l'aide de la description qui suit, illustrée par les figures annexées dont le contenu est le suivant :

la figure 1　est une figure explicative du fonctionnement du milieu photoexcitable à variation d'indice,

la figure 2　est un schéma du dispositif d'éclairage selon l'invention.

Le dispositif selon l'invention met en œuvre la restitution d'un front d'onde conjuguée d'un front d'onde incident de morphologie complexe. Cette restitution est générée par l'interférence, dans un milieu optique photoexcitable à variation d'indice, d'une onde optique incidente avec une onde de pompe.

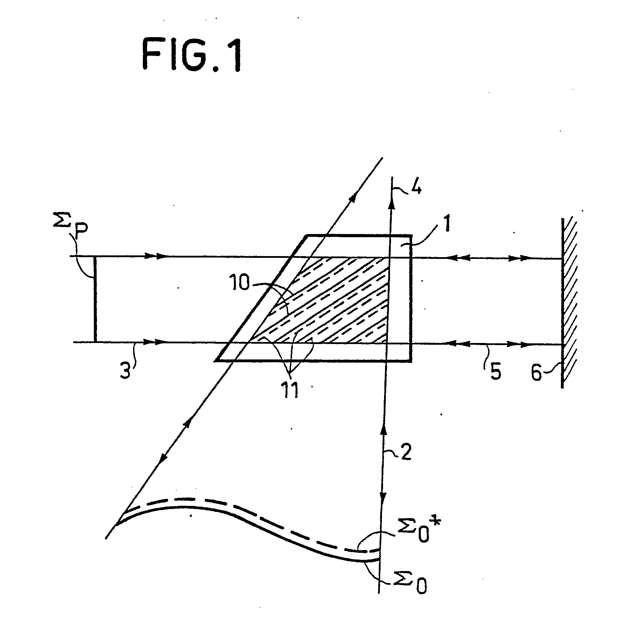

Cette interférence se produit dans un milieu à trois dimensions, schématisé en 1 sur la figure 1, et dont les caractéristiques physiques et en particulier l'indice de réfraction sont modulés spatialement par un réseau de franges 10 produit par l'interférence de l'onde optique incidente 2 de front d'onde $\Sigma_o$ quelconque et de l'onde de pompe 3, de front d'onde $\Sigma_p$, plan par exemple. Du fait de l'existence de cette modulation spatiale d'illumination qui induit un réseau de strates d'indice 11, une fraction de l'énergie de l'onde de pompe 3, ou onde de référence, est diffractée sous la forme d'une onde émergente 4 ayant des caractéristiques isomorphes de celles de l'onde incidente.

Une autre fraction de l'onde de pompe 3 traverse le milieu 1 et sort selon le faisceau 5. En interposant sur son trajet et normalement à celui-ci un miroir réfléchissant 6, on renvoie cette onde 5 dans le milieu 1, et elle constitue une onde de lecture du réseau de diffraction inscrit. Une partie de son énergie est diffractée par le réseau de strates 11 sous la forme d'une onde émergente de front d'onde complexe $\Sigma^*_o$, conjuguée de l'onde $\Sigma_o \cdot \Sigma^*_o$ a des caractéristiques isomorphes de celle de $\Sigma_o$, mais suit sa trajectoire en sens inverse, elle y subit en sens inverse les mêmes déformations.

La restitution de cette onde $\Sigma^*_o$ s'effectue en temps réel, au temps d'établissement du réseau de strates près. Selon les matériaux constituant le milieu 1, cette constante de temps varie de $10^{-3}$ à $10^{-12}$ secondes.

Il est à noter également que l'énergie de l'onde conjuguée restituée $\Sigma^*_o$ prélevée par le réseau de strates sur l'onde de pompe, ou onde de lecture peut être non négligeable par rapport à l'énergie de l'onde incidente $\Sigma_o$, arrivant dans le milieu 1, elle peut être éventuellement supérieure.

De nombreux milieux optiques sont connus pour présenter de telles propriétés. On peut citer, par exemple comme milieu gazeux, la vapeur de sodium et en général tout gaz où se produit une absorption saturée du rayonnement. On peut également envisager d'utiliser des milieux liquides tels que le sulfure de carbone. Comme milieux solides, on peut citer les matériaux photo-réfractifs tels que B.S.O. et BaTiO$_3$, mais les matériaux semiconducteurs sont également appropriés (InSb, Hg Cd Te).

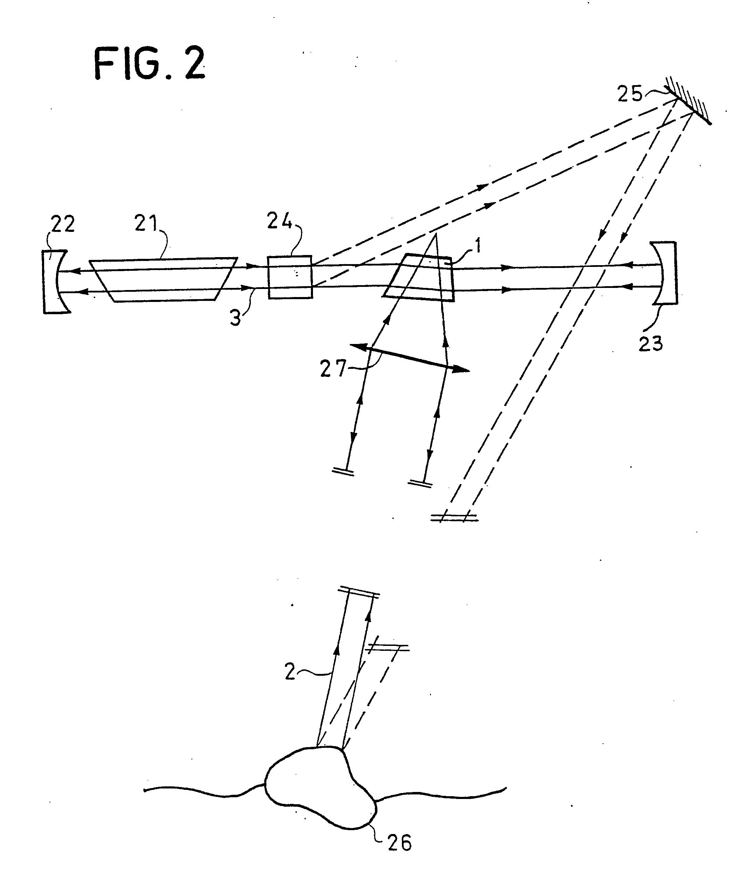

Le dispositif d'éclairage selon l'invention met en oeuvre un tel milieu. Il est schématisé sur la figure 2.

Un tel dispositif réalise en deux phases un éclairement efficace d'un objet. Dans une phase initiale, un rayonnement de courte durée est émis par une source et dirigé vers l'objet à éclairer de telle façon qu'il renvoie vers cette source un front d'onde dont la forme dépend de la structure réfléchissante de l'objet et de la traversée des milieux atmosphériques inhomogènes qui séparent l'objet de celle-ci. Ce prééclairage peu efficace va donner naissance dans une phase ultérieure à de nouvelles émissions de rayonnement qui tiennent compte de la distorsion de front d'onde rencontrée lors du premier retour d'énergie. Ainsi le post-éclairement sera efficacement concentré sur l'objet qui sera de mieux en mieux éclairé. La source illustrée sur la figure 2 permet de réaliser l'éclairage évolutif qui vient d'être décrit.

Dans une cavité laser comprenant un matériau laser proprement dit 21, et fermée par deux miroirs 22 et 23, on dispose un milieu d'interaction photoexcitable tel qu'il vient d'être décrit. Ce milieu est disposé de telle sorte qu'il soit traversé par le rayonnement laser intra-cavité qui se propage entre les deux miroirs 22 et 23.

Les deux miroirs 22 et 23 sont deux miroirs à coefficient de réflexion élevé, le plus voisin possible, technologiquement parlant, de la réflexion totale, de façon à ce que, contrairement au fonctionnement d'un laser classique, aucun rayonnement ne sorte de la cavité par transmission partielle à travers l'un des miroirs.

Pour éviter les réflexions parasites du rayonnement laser intra-cavité sur les faces du milieu d'interaction 1, il est avantageux de le disposer de telle sorte que le rayonnement intra-cavité l'absorbe selon l'incidence de Brewster, ce qui conduit, par exemple, à une disposition telle que celle qui est représentée sur la figure 2. Ce milieu 1 est de plus équipé d'une optique 27 destinée à collecter l'onde signal et renvoyer l'onde conjuguée vers l'objet.

On peut équiper le dispositif selon l'invention de moyens permettant d'obtenir, l'onde signal transitoire émise par l'objet 26 que l'on veut éclairer d'une façon prolongée. Ces moyens, représentés sur la figure 2 comprennent un commutateur 24 électro-optique ou acousto-optique, et un miroir 25.

Le commutateur 24 est disposé sur le trajet du rayonnement intra-cavité, par exemple entre le miroir 22 et le milieu 1. En fonctionnement normal, il laisse passer le rayonnement intra-cavité vers le milieu d'interaction 1. Mais il est prévu pour envoyer, pendant un court instant, le rayonnement laser sur le miroir 25 qui le réfléchit vers l'objet 26.

Le fonctionnement de ce dispositif d'éclairage est le suivant : initialement, le commutateur 24 envoie une impulsion lumineuse vers le miroir 25 pour éclairer transitoirement l'objet 26. Cet objet renvoie vers le dispositif une partie du rayonnement reçu, ce qui constitue l'onde signal transitoire qui initie le processus d'éclairage prolongé de l'objet. Le commutateur 24 est alors remis dans son état normal qui laisse passer le rayonnement intra-cavité vers le milieu 1 et le miroir 23.

L'onde signal transitoire émanant de l'objet 26 et collectée par l'optique 27 interfère, dans le volume du milieu d'interaction 1, avec le rayonnement intra-cavité, créant ainsi un réseau de franges d'interférence. Ce réseau de franges induit un réseau de strates d'indice qui diffracte une partie du rayonnement intra-cavité provenant du miroir 23 en une onde conjuguée de l'onde signal. En choisissant convenablement les paramètres de fonctionnement du milieu d'interaction 1, la fraction ainsi diffractée du rayonnement intra-cavité est équivalente à la fraction de rayonnement émise par le miroir de sortie usuel d'un laser, qui a un coefficient de réflexion de 95 %.

L'onde conjuguée de l'onde signal retourne vers l'objet 26 et subit en sens inverse les mêmes modifications, elle se trouve donc automatiquement focalisée sur l'objet, quelles que soient les perturbations de l'atmosphère traversée.

L'objet la renvoie vers le dispositif où elle interfère à nouveau avec le rayonnement intra-cavité. Une nouvelle onde conjuguée est émise par le milieu, et le processus continue. A chaque instant, le réseau de diffraction inscrit dans le milieu correspond exactement à l'onde provenant de l'objet, c'est-à-dire que ce réseau est modifié en permanence en fonction des perturbations du trajet optique objet-dispositif.

Ainsi, sans aucun mouvement mécanique du faisceau, le dispositif assure l'éclairage de l'objet, et la focalisation parfaite du faisceau d'éclairage sur cet objet, aussi longtemps que nécessaire, la puissance nominale du laser se trouvant répartie sur la surface d'onde complexe $\Sigma_o$.

Un autre avantage du dispositif est l'amplification qu'il est susceptible de produire sur l'onde d'éclairage : si l'interaction illumination-indice dans le milieu photoexcitable est efficace, l'intensité du front d'onde conjugué est supérieure à l'intensité du front d'onde incident, l'énergie supplémentaire étant prélevée sur le rayonnement intra-cavité.

Une condition de fonctionnement est évidemment que le temps d'inscription du réseau de diffraction dans le matériau constituant le milieu 1 reste très court devant les fluctuations temporelles de la phase du signal incident introduites par les perturbations du trajet optique de ce signal.

Ce dispositif fonctionne dans tout domaine de longueur d'onde, à condition que le milieu 1 soit adapté, en transparence, à la longueur d'onde de la source laser utilisée. Il est notament utilisable dans le domaine infra-rouge, ce qui est avantageux pour les longs parcours dans l'air.

Ce dispositif d'illumination peut être intégré dans des systèmes de détection d'objets, de poursuite d'une cible, de télémétrie.

**Revendications**

1. Dispositif d'éclairage d'un objet par le rayonnement issu d'un laser dont la cavité est fermée par deux miroirs, ledit rayonnement étant perturbé par un milieu de transmission situé entre ledit laser et ledit objet, ledit rayonnement étant émis vers ledit objet par un milieu d'interaction photoexcitable à variation d'indice, disposé à l'intérieur de la cavité dudit laser sur le trajet du rayonnement intra-cavité, ce rayonnement intra-cavité interférant au sein de ce milieu avec une onde signal provenant dudit objet (26) pour générer ·une onde ·complexe conjuguée de l'onde signal, cette onde conjuguée retournant vers l'objet (26), caractérisé en ce que ledit milieu de transmission est un milieu fluctuant, en ce que l'onde signal qui traverse ce milieu de transmission évolue lentement dans le temps par rapport au temps d'inscription du milieu d'interaction, sous l'effet des fluctuations temporelles de phase résultant dudit milieu fluctuant, de sorte que l'onde conjuguée réfléchie par l'objet, après de multiples aller-retours entre l'objet et le milieu d'interaction, maintienne l'existence du réseau dans le milieu d'interaction en modifiant, en permanence en fonction des perturbations du milieu fluctuant, la forme des strates de ce réseau, et en ce que les deux miroirs de la cavité laser sont des miroirs à réflexion totale, l'éclairage évolutif prolongé de l'objet (26) étant initié par un moyen de prélèvement intracavité (24, 25) dirigeant vers ledit objet (26) un prééclairement de courte durée par rapport au temps d'éclairage de l'objet par l'onde conjuguée traversant ledit milieu de transmission.

2. Dispositif d'éclairage selon la revendication 1, caractérisé en ce que les moyens permettant de prééclairer transitoirement l'objet comprenant à l'intérieur de la cavité laser, un déviateur (24) et un troisième miroir (25), ce déviateur (24) prélevant une impulsion lumineuse sur le rayonnement intra-cavité et l'envoyant sur ce troisième miroir (25) qui le dirige vers l'objet (26).

3. Dispositif d'éclairage selon l'une quelconque des revendications 1 et 2, caractérisé en ce que le milieu d'interaction photoexcitable (1) est disposé sur le trajet du rayonnement intra-cavité selon l'incidence de Brewster.

4. Dispositif d'éclairage selon l'une quelconque des revendications 1 à 3, caractérisé en ce que le milieu d'interaction photoexcitable (1) est un matériau photoréfractif.

5. Dispositif d'éclairage selon l'une quelconque des revendications 1 à 3, caractérisé en ce que le milieu d'interaction photoexcitable (1) est un matériau semiconducteur.

6. Dispositif d'éclairage selon l'une quelconque des revendications 1 à 3, caractérisé en ce que le milieu d'interaction photoexcitable (1) est un gaz permettant l'absorption saturée dudit rayonnement.

7. Dispositif d'éclairage selon la revendication 4, caractérisé en ce que ledit matériau photoréfractif est l'un des matériaux du groupe : B.S.O., $BaTiO_3$, sulfure de carbone.

8. Dispositif d'éclairage selon la revendication 5, caractérisé en ce que ledit matériau semiconducteur est l'un des matériaux du groupe : Ge, InSb, HgCdTe.

9. Dispositif d'éclairage selon la revendication 6, caractérisé en ce que ledit gaz est de la vapeur de sodium.

10. Dispositif d'éclairage selon l'une quelconque des revendications 1 à 9, caractérisé en ce que ledit rayonnement est un rayonnement infra-rouge.

**Claims**

1. A device for illuminating an object with the radiation supplied by a laser, the cavity of which is closed by two mirrors, said radiation being ·disturbed by a transmission medium located between said laser and said object, said radiation being transmitted towards said object by a photoactivative interaction medium with index variation, said medium being disposed inside the cavity of said laser on the path of the radiation inside the cavity, said radiation inside the cavity interfering in that medium with a signal wave coming from the object (26) for generating a complex wave conjugated with the signal wave, said conjugated wave returning to the object (26), characterized in that said transmission medium is a fluctuating medium, that the signal wave passing through the transmission medium evolves slowly in time with respect to the inscription time of the interaction medium under the effect of temporary phase fluctuations resulting from the fluctuating medium in such a way that the conjugated wave reflected by the object maintains, after multiple to and fro movements between the object and the interaction medium, the existence of the network in the interaction medium by modifying permanently in dependence of the perturbations of the fluctuated medium the stratus shape of said network, and that the two mirrors of the laser cavity are totally reflecting mirrors, the extented evolving illumination of the object (26) being initiated by an extraction means (24, 25) situated in the cavity and directing toward the object (26) a preillumination of short duration with respect to the object illumination time effected by the conjugated wave which passes through said transmission medium.

2. An illumination device according to claim 1, characterized in that the means by which the object can be temporarily preilluminated comprise inside the laser cavity a deviator (24) and a third mirror (25), said deviator (24) extracting a light pulse from the radiation in the cavity and directing it to the third mirror (25) by which it is directed towards the object (26).

3. An illumination device according to any one of claims 1 and 2, characterized in that the photoactivative interaction medium (1) is disposed on the radiation path in the cavity according to the Brewster angle of incidence.

4. An illumination device according to any one of claims 1 to 3, characterized in that the photoactivative interaction medium (1) is a photorefractive material.

5. An illumination device according to any one of claims 1 to 3, charateirzed in that the photoactivative interaction medium (1) is a semiconductor material.

6. An illumination device according to any one of claims 1 to 3, characterized in that the photoactivative interaction medium (1) is a gas which allows the saturated absorption of said radiation.

7. An illumination device according to claim 4, characterized in that said photorefractive material is chosen from among the group B.S.O., BaTiO$_3$, carbon sulfide.

8. An illumination device according to claim 5, characterized in that said semiconductor material is chosen from among the group Ge, InSb, HgCdTe.

9. An illumination device according to claim 6, characterized in that said gas is sodium vapour.

10. An illumination device according to any one of claims 1 to 9, characterized in that said radiation is an infrared radiation.

**Patentansprüche**

1. Vorrichung zur Beleuchtung. eines Gegenstands mit einer von einem Laser ausgehenden Strahlung, wobei der Laserhohlraum von zwei Spiegeln verschlossen ist und die Strahlung durch ein zwischen dem Laser und dem Gegenstand befindliches Übertragungsmedium gestört wird und wobei die Strahlung in Richtung auf den Gegenstand von einem mit Licht anregbaren Interaktionsmedium mit Indexvariation ausgeht, das sich im Strahlungsweg innerhalb des Laserhohlraums befindet, wobei die Strahlung in diesem Medium mit einer Signalwelle interferiert, die vom Gegenstand (26) ausgeht, um eine komplexe, zur Signalwelle konjugierte Welle zu erzeugen, die zum Gegenstand (26) zurückkehrt, dadurch gekennzeichnet, daß das Übertragungsmedium ein fluktuierendes Medium ist, das die Signalwelle, die das Übertragungsmedium durchquert, sich zeitlich langsam bezüglich der Einschreibzeit in das Interaktionsmedium unter der Wirkung der zeitlichen Phasenfluktuationen aufgrund des fluktuierenden Mediums entwickelt, derart, daß die vom Gegenstand reflektierte konjugierte Welle nach vielfachem Hin und Her zwischen dem Gegenstand und dem Interaktionsmedium die Existenz des Netzes im Interaktionsmedium aufrechterhält, indem die Form der Schichten dieses Netzes permanent abhängig von den Störungen des fluktuierenden Mediums verändert wird, und daß die beiden Spiegel des Laserhohlraums total-reflektierende Spiegel sind, wobei die sich entwickelnde verlängerte Beleuchtung des Gegenstands (26) durch ein Mittel (24, 25) zur Lichtentnahme aus dem Hohlraums eingeleitet wird, das ein bezüglich der Beleuchtungszeit des Gegenstands durch die das Übertragungsmedium durchquerende konjugierte Welle kurzdauernde Vorbeleuchtung auf den Gegenstand richtet.

2. Beleuchtungsvorrichtung nach Anspruch 1, dadurch gekennzeichnet, daß die Mittel zur vorübergehenden Vorbeleuchtung des Gegenstands im Inneren des Laserhohlraums einen Ablenker (24) aufweisen sowie einen dritten Spiegel (25), wobei der Ablenker (24) einen Lichtimpuls aus der im Hohlraum herrschenden Strahlung entnimmt und ihn zum dritten Spiegel (25) sendet, der ihn schließlich auf den Gegenstand (26) richtet.

3. Beleuchtungsvorrichtung nach einem beliebigen der Ansprüche 1 und 2, dadurch gekennzeichnet, daß das mit Licht anregbare Interaktionsmedium (1) im Weg der Strahlung innerhalb des Hohlraums gemäß dem Brewster-Einfallswinkel angeordnet ist.

4. Beleuchtungsvorrichtung nach einem beliebigen der Ansprüche 1 bis 3, dadurch gekennzeichnet, daß das mit Licht anregbare Interaktionsmedium (1) ein lichtrefraktives Material ist.

5. Beleuchtungsvorrichtung nach einem beliebigen der Ansprüche 1 bis 3, dadurch gekennzeichnet, daß das mit Licht anregbare Interaktionsmedium (1) ein Halbleitermaterial ist.

6. Beleuchtungsvorrichtung nach einem beliebigen der Ansprüche 1 bis 3, dadurch gekennzeichnet, daß das mit Licht anregbare Interaktionsmedium (1) ein Gas ist, das die gesättigte Absorption der Strahlung erlaubt.

7. Beleuchtungsvorrichtung nach Anspruch 4, dadurch gekennzeichnet, daß das lichtrefraktive Material eines der Materialien aus der Gruppe ist, die gebildet wird von B.S.O., BaTiO₃, Carbonsulfid.

8. Beleuchtungsvorrichtung nach Anspruch 5, dadurch gekennzeichnet, daß das Halbleitermaterial ein Material aus der Gruppe ist, die gebildet wird von Ge, InSb, HgCdTe.

9. Beleuchtungsvorrichtung nach Anspruch 6, dadurch gekennzeichnet, daß das Gas Natriumdampf ist.

10. Beleuchtungsvorrichtung nach einem beliebigen der Ansprüche 1 bis 9, dadurch gekennzeichnet, daß die Strahlung eine Infrarotstrahlung ist.

# FIG.1

# FIG. 2